# EUROPEAN PATENT APPLICATION

(11) **EP 2 653 337 A1**
(43) Date of publication of application: **23.10.2013**
(21) Application number: 10860866.2
(22) Date of filing: 17.12.2010
(51) Int. Cl.: B60L 11/18, H02J 7/00, H02J 7/34

(54) **VEHICLE AND VEHICLE CONTROL METHOD**

(71) Applicant: TOYOTA JIDOSHA KABUSHIKI KAISHA, Toyota-shi, Aichi-ken, 471-8571 (JP)
(72) Inventor: MITSUTANI, Noritake, Toyota-shi, Aichi-ken, 471-8571 (JP)
(74) Representative: Intès, Didier Gérard André
(86) International application number: PCT/JP2010/072785
(87) International publication number: WO 2012/081124

(57) **Abstract**

A vehicle (1) includes: a power storage device (10) configured such that it can be charged from outside the vehicle; a charging device (200) that receives electric power from outside the vehicle and charges the power storage device; an auxiliary device (80) that receives the electric power from the power storage device or from outside the vehicle; and a control device (100) that controls the charging device and the auxiliary device. When there is a request for operating the auxiliary device during execution of charging of the power storage device by the charging device, the control device continues operation of the auxiliary device even if input of the electric power from outside is discontinued. When there is no request for operating the auxiliary device during execution of charging of the power storage device by the charging device, the control device separates the power storage device from the charging device and the auxiliary device in response to discontinuation of input of the electric power from outside.

## Description

### TECHNICAL FIELD

The present invention relates to a vehicle and a method for controlling the vehicle, and particularly to a vehicle equipped with a power storage device configured such that it can be charged from outside the vehicle, and a method for controlling the vehicle.

### BACKGROUND ART

In recent years, an electric vehicle, a hybrid vehicle, a fuel cell vehicle and the like have been receiving attention as environmentally-friendly vehicles. These vehicles are equipped with a motor for generating driving force for traveling, and a power storage device for storing electric power supplied to the motor. A hybrid vehicle is further equipped with an internal combustion engine together with the motor as a power source, and a fuel cell vehicle is equipped with a fuel cell as a DC power supply for driving the vehicle. Among these vehicles, there has been known a vehicle including a vehicle-mounted power storage device for driving the vehicle, which can be charged by an ordinary household power supply.

Japanese Patent Laying-Open No. 2009-171733 (PTD 1) discloses a vehicle including a power storage device charged with electric power from a power supply external to the vehicle. This vehicle uses a pilot signal from an oscillator in a power cable as a start-up signal for a charging system in the vehicle.

### CITATION LIST

### PATENT DOCUMENT

PTD 1: Japanese Patent Laying-Open No. 2009-171733
PTD 2: Japanese Patent Laying-Open No. 2009-71900
PTD 3: Japanese Patent Laying-Open No. 2009-201170

### SUMMARY OF INVENTION

### TECHNICAL PROBLEM

In the vehicle disclosed in Japanese Patent Laying-Open No. 2009-171733, a state of connection between the external AC power supply and the vehicle is detected by using the pilot signal.

On the other hand, there is also a user's request to operate a vehicle-mounted auxiliary device (e.g., an air-conditioning device such as an air conditioner, a lighting device such as a lamp, an audio device and the like) during charging. The technique disclosed in Japanese Patent Laying-Open No. 2009-171733 does not take an actuation state of the auxiliary device into consideration. For example, if the charging system in the vehicle is shut down when the state of connection with the vehicle becomes abnormal (e.g., when a charging cable is removed from the vehicle or when a power failure occurs), actuation of the auxiliary device stops suddenly, which may be contrary to the user's intention in some cases.

An object of the present invention is to provide a vehicle in which the auxiliary device can be controlled in accordance with the user's intention when input of electric power from outside is discontinued during charging, and a method for controlling the vehicle.

### SOLUTION TO PROBLEM

In summary, the present invention is directed to a vehicle, including: a power storage device configured such that it can be charged from outside the vehicle; a charging device that receives electric power from outside the vehicle and charges the power storage device; an auxiliary device that receives the electric power from the power storage device or from outside the vehicle; and a control device that controls the charging device and the auxiliary device. When there is a request for operating the auxiliary device during execution of charging of the power storage device by the charging device, the control device continues operation of the auxiliary device even if input of the electric power from outside is discontinued. When there is no request for operating the auxiliary device during execution of charging of the power storage device by the charging device, the control device separates the power storage device from the charging device and the auxiliary device in response to discontinuation of input of the electric power from outside.

Preferably, the auxiliary device includes an air-conditioning device.

More preferably, the vehicle further includes a system main relay that opens and closes an electric power path extending from the power storage device to the charging device and the air-conditioning device. When there is no request for operating the air-conditioning device during execution of charging of the power storage device by the charging device, the control device controls the system main relay into an open state in response to discontinuation of input of the electric power from outside.

Still more preferably, when input of the electric power from outside is discontinued, the control device maintains the system main relay in a closed state until a predetermined time period elapses, such that charging of the power storage device can be restarted when input of the electric power from outside is restarted.

Still more preferably, the control device includes: a determining unit that determines a supply state of the electric power from outside; and a detecting unit that detects the request for operating the air-conditioning device.

According to another aspect, the present invention is directed to a method for controlling a vehicle including a power storage device configured such that it can be charged from outside the vehicle, a charging device that receives electric power from outside the vehicle and charges the power storage device, and an auxiliary device that receives the electric power from the power storage device or from outside the vehicle. The control method includes the steps of: determining whether charging of the power storage device by the charging device is in execution or not; determining whether there is a request for operating the auxiliary device or not; when there is a request for operating the auxiliary device during execution of charging of the power storage device by the charging device, continuing operation of the auxiliary device even if input of the electric power from outside is discontinued; and when there is no request for operating the auxiliary device during execution of charging of the power storage device by the charging device, separating the power storage device from the charging device and the auxiliary device in response to discontinuation of input of the electric power from outside.

### ADVANTAGEOUS EFFECTS OF INVENTION

According to the present invention, unexpected situations such as sudden stop of the auxiliary device when input of the electric power from outside is discontinued during charging can be prevented and the auxiliary device can be controlled in accordance with the user's intention.

### BRIEF DESCRIPTION OF DRAWINGS

Fig. 1 is an overall block diagram of a vehicle 1 equipped with a control device according to the present embodiment.
Fig. 2 is a schematic diagram of a start-up circuit of a low-voltage system.
Fig. 3 is a diagram showing a relationship between IG switch operation and an IG signal.
Fig. 4 is a diagram illustrating a relationship among plug-in operation, an IGP signal and a CPLT signal.
Fig. 5 is a functional block diagram of an ECU 100 about a portion related to selection of control modes and air-conditioning control.
Fig. 6 is a flowchart showing a process procedure when a mode setting unit 120 sets a control mode.
Fig. 7 is a state transition diagram related to operation of an air-conditioning device during a charging control mode.
Fig. 8 is a flowchart for describing control of an auxiliary device during the charging control mode.

### DESCRIPTION OF EMBODIMENTS

Embodiments of the present invention will be described in detail hereinafter with reference to the drawings, in which the same reference characters are given to the same or corresponding portions and description thereof will not be repeated.

### [Configuration of Vehicle]

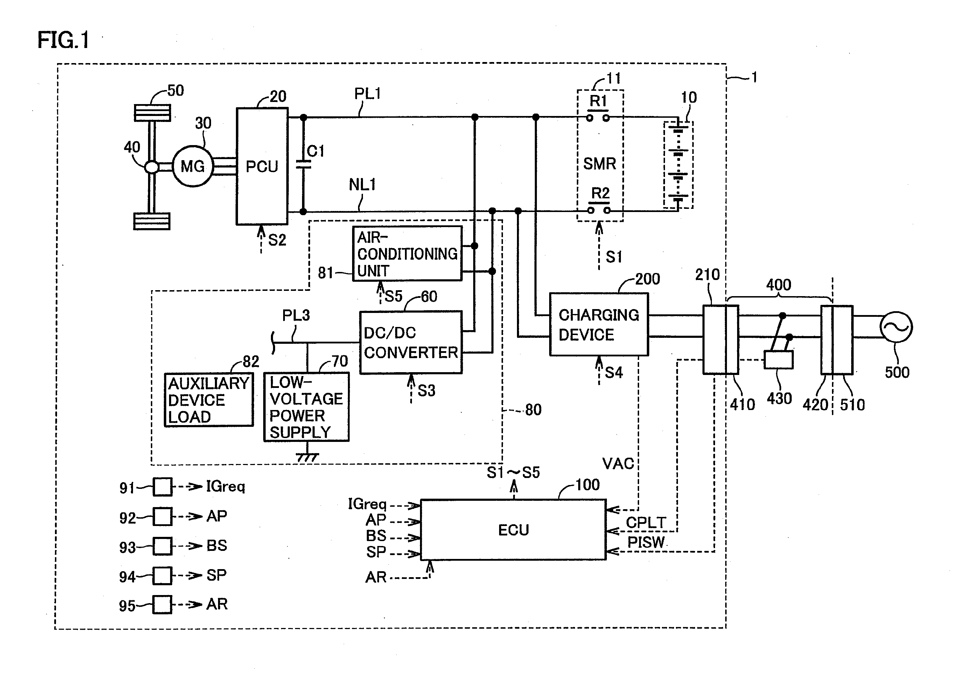

Fig. 1 is an overall block diagram of a vehicle 1 equipped with a control device according to the present embodiment. Vehicle 1 includes a power storage device 10, a system main relay (SMR) 11, a power control unit (PCU) 20, a motor generator (MG) 30, a power transmission gear 40, a driving wheel 50, a low-voltage power supply 70, an auxiliary device 80, and a control device (ECU) 100. Auxiliary device 80 includes an air-conditioning unit 81 such as an air conditioner, a DC/DC converter 60 for transmitting electric power to a low-voltage auxiliary device system, and low-voltage power supply 70 and an auxiliary device load 82 connected to the low-voltage auxiliary device system.

Power storage device 10 is configured such that it can be charged from outside the vehicle and stores electric power for obtaining the driving force of vehicle 1. Power storage device 10 is, for example, a secondary battery such as a lithium-ion battery and a nickel-metal hydride battery. Power storage device 10 may be an electric double-layer capacitor.

Power storage device 10 is connected to PCU 20 by a positive electrode line PL1 and a negative electrode line NL1. Power storage device 10 supplies electric power for generating the driving force of vehicle 1 to PCU 20. Power storage device 10 also stores electric power generated by MG 30. An output of power storage device 10 is approximately 200 V, for example.

SMR 11 includes relays R1 and R2. Relays R1 and R2 are controlled independently in accordance with a control signal S1 from ECU 100, and switch from supply to shutoff or from shutoff to supply of the electric power between power storage device 10 and PCU 20.

A capacitor C1 is connected between positive electrode line PL1 and negative electrode line NL1, and reduces voltage fluctuations between positive electrode line PL1 and negative electrode line NL1.

PCU 20 is configured to include a converter that boosts a voltage supplied through positive electrode line PL1 and negative electrode line NL1, and an inverter that receives the voltage boosted by the converter and drives MG 30. PCU 20 is controlled in accordance with a control signal S2 from ECU 100, and converts DC power supplied from power storage device 10 into AC power that can drive MG 30 and outputs the AC power to MG 30. As a result, MG 30 is driven by using the electric power of power storage device 10.

MG 30 is an AC rotating electric machine, and is, for example, a permanent magnet-type synchronous motor that includes a rotor having a permanent magnet embedded therein.

Output torque of MG 30 is transmitted through power transmission gear 40 to driving wheel 50 and causes vehicle 1 to travel. During regenerative braking operation of vehicle 1, MG 30 can generate electric power by the rotational force of driving wheel 50. The generated electric power is then converted by PCU 20 into electric power for charging power storage device 10.

Although Fig. 1 illustrates the case where one MG 30 is provided, a plurality of motor generators may be provided. In addition to MG 30, an engine may also be included as a power source. In other words, vehicle 1 in the present embodiment is applicable to vehicles as a whole such as an electric vehicle, a hybrid vehicle and a fuel cell vehicle that obtain the driving force by using the electric power.

DC/DC converter 60 is connected to positive electrode line PL1 and negative electrode line NL1. DC/DC converter 60 is controlled in accordance with a control signal S3 from ECU 100, and steps down a voltage between positive electrode line PL1 and negative electrode line NL1. DC/DC converter 60 supplies the stepped down voltage (approximately 14 to 12 V) through a positive electrode line PL3 to low-voltage power supply 70, auxiliary device load 82, ECU 100 and the like.

Low-voltage power supply 70 is also called "auxiliary device battery" and is typically configured to include a lead storage battery. An output voltage of low-voltage power supply 70 is lower than the output voltage of power storage device 10 and is approximately 12 V, for example. Hereinafter, machinery actuated by electric power supplied from low-voltage power supply 70 will also be collectively referred to as "low-voltage system".

Auxiliary device load 82 includes, for example, an audio unit, a variety of lamps, a wiper, a heater, various ECUs, an electric pump, a DC/AC converter for supplying AC power to a service power outlet, and the like that are not shown.

Vehicle 1 further includes a charging device 200 and an inlet 210 as a configuration for external charging by which power storage device 10 is charged with electric power supplied from an external power supply 500.

Inlet 210 is provided on the body of vehicle 1 to receive the AC power from external power supply 500. A connector 410 of a charging cable 400 is connected to inlet 210. A plug 420 of charging cable 400 is connected to a power outlet (wall socket) 510 of external power supply 500 (e.g., household power supply), so that the electric power of external power supply 500 can be supplied to vehicle 1 through charging cable 400.

A pilot circuit 430 is provided within charging cable 400. Pilot circuit 430 is operated by the electric power supplied from external power supply 500, and generates a control pilot signal (hereinafter referred to as "CPLT signal"). When connector 410 is connected to inlet 210, pilot circuit 430 causes the CPLT signal to oscillate in a predetermined duty cycle (ratio of a pulse width to an oscillation cycle). When the electric power of external power supply 500 can be supplied to vehicle 1 (i.e., when charging cable 400 is connected to both external power supply 500 and vehicle 1, and there is no shutoff of electric power supply caused by a power failure and the like), the CPLT signal is inputted to ECU 100 through inlet 210.

When connector 410 is connected to inlet 210, a not-shown limit switch provided within connector 410 is actuated. In accordance with actuation of this limit switch and operation of an operation button for attaching and detaching the connector, a cable connection signal PISW is inputted from inlet 210 to ECU 100.

Charging device 200 is connected to inlet 210. Charging device 200 is controlled in accordance with a control signal S4 from ECU 100, and converts the AC power supplied from inlet 210 into electric power (approximately 200 V DC) with which power storage device 10 can be charged and outputs the electric power to positive electrode line PL1 and negative electrode line NL1. As a result, power storage device 10 is charged with the electric power of external power supply 500.

A voltage sensor is provided at an input portion of charging device 200. In accordance with a result of detection by this voltage sensor, charging device 200 outputs, to ECU 100, a signal VAC indicating whether a voltage has been supplied from inlet 210 or not.

Vehicle 1 further includes an IG switch 91, an accelerator pedal position sensor 92, a brake pedal stroke sensor 93, a shift position sensor 94, and an air-conditioning request switch 95. Each of these sensors and switches outputs a result of detection or a result of setting to ECU 100.

IG switch 91 is a switch for a user to input operation for bringing vehicle 1 into a traveling possible state (hereinafter also referred to as "Ready-ON state"). When the user presses IG switch 91 in a traveling impossible state (hereinafter also referred to as "Ready-OFF state"), IG switch 91 outputs, to ECU 100, an IGreq signal indicating that the user is requesting the Ready-ON state. In accordance with this IGreq signal, ECU 100 is started up. In the present embodiment, "start-up" refers to a change from a stop state (sleep state) to an actuation state.

Accelerator pedal position sensor 92 detects an amount of operation AP of an accelerator pedal. Brake pedal stroke sensor 93 detects an amount of stroke BS of a brake pedal.

Shift position sensor 94 detects a position (shift position) SP of a shift lever (not shown) operated by the user. The present embodiment will be described, assuming that shift position SP is set to any one of a D (drive) position, an N (neutral) position, an R (reverse) position, and a P (parking) position.

Air-conditioning request switch 95 is a switch operated when the user requests air conditioning. For example, when the user wants to air-condition the vehicle interior during external charging of the vehicle, the user turns on an air-conditioner switch. In this case, the air-conditioner switch corresponds to air-conditioning request switch 95. The following case should also be taken into consideration: even when the user is not in the vehicle interior, the user wants to actuate the air conditioner to set the vehicle interior temperature at a comfortable temperature before the user rides on the vehicle. Such pre-ride air conditioning will also be referred to as "pre-air conditioning". In this case, a remote control reception device that receives a command from the user and a timer device that sets an air-conditioner actuation start time correspond to air-conditioning request switch 95. Air-conditioning request switch 95 outputs, to ECU 100, a signal AR indicating the air-conditioning request.

ECU 100 includes a CPU (Central Processing Unit) and a memory. ECU 100 inputs the signals from the sensors and the like, and outputs the control signals to the devices. ECU 100 also controls vehicle 1 and the devices. Control of them is not limited to processing by software and can be carried out by dedicated hardware (electronic circuitry).

ECU 100 generates above-described control signals S1 to S4 in accordance with the signals and the like inputted from the sensors and the like, and outputs control signals S1 to S4 to the corresponding devices. The ECU also generates a control signal S5 in accordance with signal AR indicating the air-conditioning request, and outputs control signal S5 to air-conditioning unit 81.

Although ECU 100 is configured as one unit in Fig. 1, ECU 100 may be divided for each function, for example.

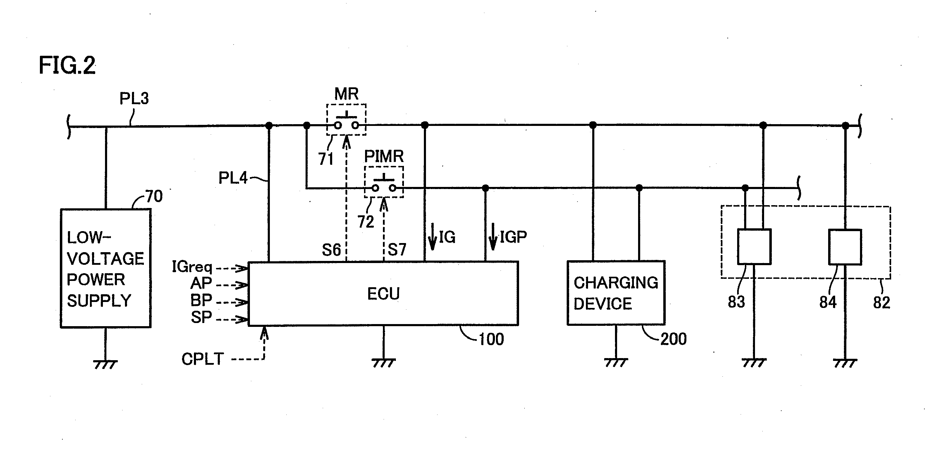

Fig. 2 is a schematic diagram of a start-up circuit of the low-voltage system. This start-up circuit includes a main relay (MR) 71, a plug-in main relay (PIMR) 72 and two power supply switches. MR 71 and PIMR 72 are controlled in accordance with control signals S6 and S7 from ECU 100, respectively.

Auxiliary device load 82 includes an auxiliary device load 83 that can be used during charging and during traveling, and an auxiliary device load 84 that can be used only during traveling (during Ready-ON).

Auxiliary device load 83, ECU 100 and charging device 200 are connected to low-voltage power supply 70 with MR 71 interposed therebetween, and are also connected to low-voltage power supply 70 with PIMR 72 interposed therebetween. ECU 100 is constantly connected to low-voltage power supply 70 by a power line PL4. On the other hand, auxiliary device load 84 is connected to low-voltage power supply 70 with MR 71 interposed therebetween, while auxiliary device load 84 is not connected to low-voltage power supply 70 with PIMR 72 interposed therebetween.

In the sleep state, ECU 100 monitors the IGreq signal and the CPLT signal while slightly consuming electric power supplied through power line PL4.

When the user presses IG switch 91 in the sleep state, the IGreq signal is inputted to ECU 100. In this case, ECU 100 outputs, to MR 71, control signal S5 that brings MR 71 into the closed state. As a result, MR 71 is brought into the closed state, and the electric power of low-voltage power supply 70 is supplied to the low-voltage system, and the low-voltage system including ECU 100 is started up. This state is the Ready-ON state. Hereinafter, the electric power supplied from low-voltage power supply 70 through MR 71 to ECU 100 will be referred to as "IG signal". By input of this IG signal, ECU 100 is started up.

On the other hand, when the user performs operation of connecting charging cable 400 to external power supply 500 and vehicle 1 (hereinafter referred to as "plug-in operation") in the sleep state, the above-described CPLT signal is inputted to ECU 100. In this case, ECU 100 outputs, to PIMR 72, control signal S6 that brings PIMR 72 into the closed state. As a result, PIMR 72 is brought into the closed state, and the electric power of low-voltage power supply 70 is supplied to charging device 200 and ECU 100. At this time, the electric power can pass through auxiliary device load 83 (e.g., the audio device, the DC/AC converter for supplying AC power to the service power outlet, the heater, a variety of lamps and the like) that can be started up during external charging, while auxiliary device load 84 (e.g., various ECUs such as an engine ECU used only during traveling, a PCU control unit, a sensor, an electric oil pump of a PCU cooling system, and the like) that needs not be started up during external charging is not started up. Therefore, wasted power consumption is reduced. Hereinafter, the electric power supplied from low-voltage power supply 70 through PIMR 72 to ECU 100 will be referred to as "IGP signal". By input of not only the above-described IG signal but also this IGP signal, ECU 100 is started up.

As described above, by input of the IG signal or the IGP signal, ECU 100 is started up. In the following description, "ON" used about a signal means that the signal is in an active state and "OFF" means that the signal is in an inactive state.

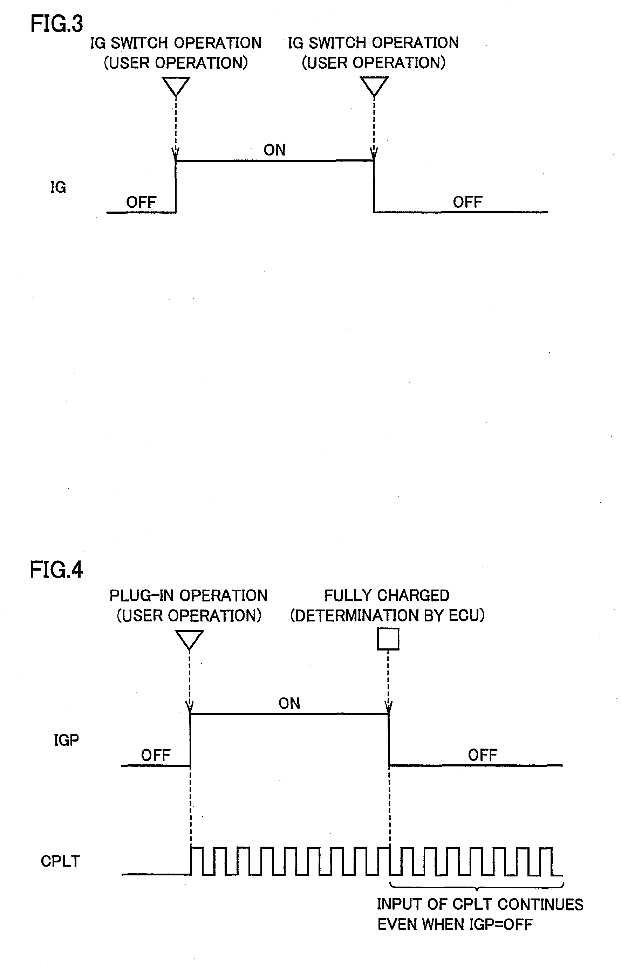

Fig. 3 is a diagram showing a relationship between IG switch operation (user's operation of pressing IG switch 91) and the IG signal. When the IG switch operation is performed in the case where the IG signal is "OFF" (a state where the IG signal is not yet inputted to ECU 100), the IGreq signal is inputted to ECU 100 and the IG signal changes from "OFF" to "ON" (a state where the IG signal has been inputted to ECU 100). On the other hand, when the IG switch operation is performed in the case where the IG signal is "ON", the IG signal changes from "ON" to "OFF". As described above, ON/OFF of the IG signal is switched in accordance with the IG switch operation by the user, not determination by ECU 100.

Fig. 4 is a diagram illustrating a relationship among the plug-in operation, the IGP signal and the CPLT signal. When the plug-in operation is performed in the case where the IGP signal is "OFF", the CPLT signal is inputted to ECU 100 and the IGP signal changes from "OFF" to "ON". As a result, ECU 100 is started up and the externally chargeable state is attained. Thereafter, when ECU 100 determines that power storage device 10 has been fully charged by external charging, ECU 100 voluntarily brings PIMR 72 into the open state and causes the IGP signal to change from "ON" to "OFF" even without the user's operation. As a result, ECU 100 is brought into the sleep state. In this case, until the user performs operation of removing charging cable 400 from external power supply 500 or vehicle 1 (hereinafter referred to as "plug-out operation"), input of the CPLT signal is continued even after the IGP signal has changed to "OFF" as shown in Fig. 4, unless a power failure occurs at external power supply 500.

After start-up, ECU 100 selects any one of a traveling control mode for controlling traveling of vehicle 1 and a charging control mode for controlling charging device 200 for external charging, based on at least one of the IG signal, the IGP signal, an ST signal (described below), and the CPLT signal, and controls the devices of vehicle 1 in the selected control mode.

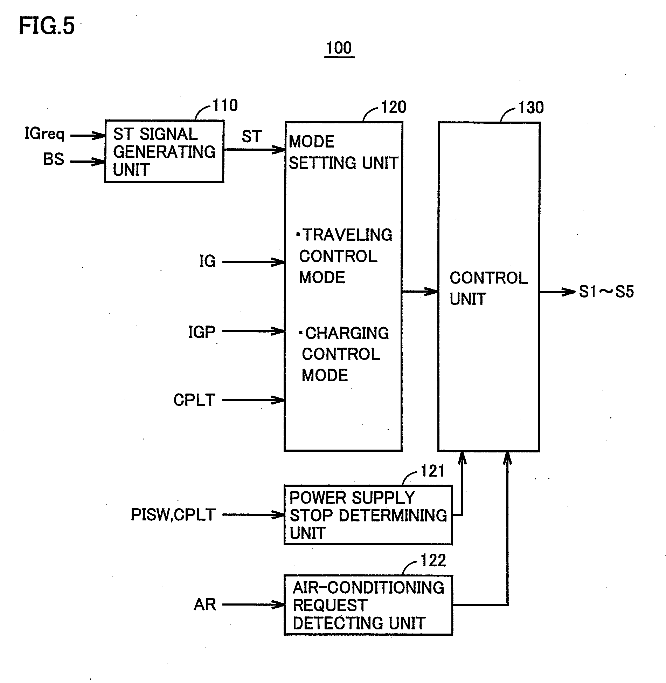

Fig. 5 is a functional block diagram of ECU 100 about a portion related to selection of the control mode and air-conditioning control. Each functional block shown in Fig. 5 may be implemented by hardware processing by electronic circuitry or the like, or by software processing by executing a program or the like.

ECU 100 includes an ST signal generating unit 110, a mode setting unit 120, a power supply stop determining unit 121, an air-conditioning request detecting unit 122, and a control unit 130.

ST signal generating unit 110 determines whether or not the user has performed operation of requesting start of traveling of vehicle 1 (hereinafter referred to as "start operation"). If ST signal generating unit 110 determines that the start operation has been performed, ST signal generating unit 110 generates the ST signal indicating that the start operation has been performed, and outputs the ST signal to mode setting unit 120. What operation corresponds to the start operation may be preliminarily determined. In the following description, the start operation refers to "operation of pressing IG switch 91 while stepping on the brake pedal". Therefore, when the IGreq signal is inputted in the case where amount of stroke BS of the brake pedal is larger than 0, ST signal generating unit 110 generates the ST signal.

Mode setting unit 120 selects any one of the traveling control mode and the charging control mode based on combinations of the IG signal, the IGP signal, the ST signal, and the CPLT signal.

### [Description about Settings in Charging Control Mode and Traveling Control Mode]

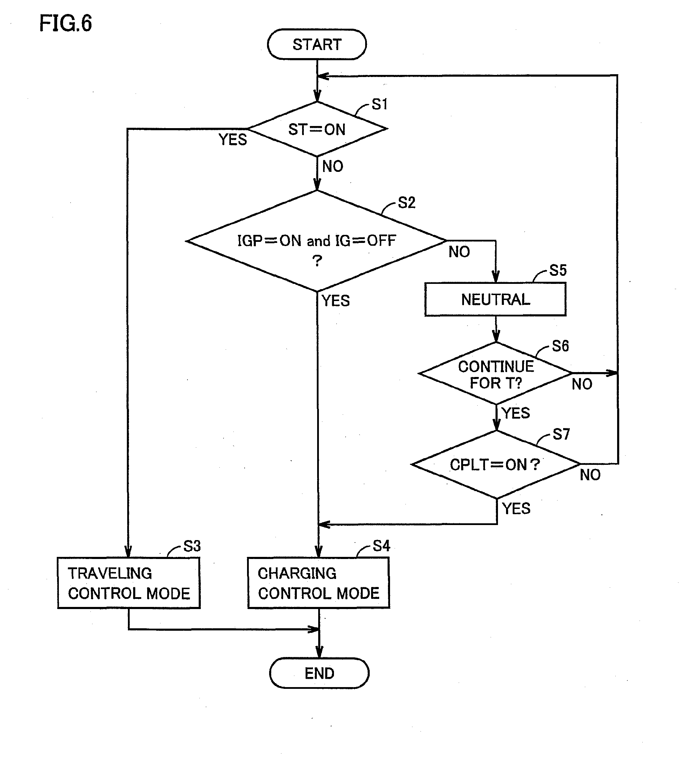

Fig. 6 is a flowchart showing a process procedure when mode setting unit 120 sets the control mode. The process shown in this flowchart is started when ECU 100 is started up. Therefore, when this process is started, at least one of the IGP signal and the IG signal is "ON". Each step in this flowchart may be implemented by hardware processing or by software processing.

Referring to Figs. 5 and 6, in step S1, mode setting unit 120 determines whether the ST signal has been inputted (ST=ON) or not. If ST=ON (YES in step S1), mode setting unit 120 causes the process to proceed to step S3 and selects the traveling control mode. If not (NO in step S1), the process proceeds to step S2.

In step S2, mode setting unit 120 determines whether the IGP signal has been inputted and the IG signal is not inputted (IGP=ON and IG=OFF) or not.

If IGP=ON and IG=OFF (YES in step S2), mode setting unit 120 causes the process to proceed to step S4 and selects the charging control mode.

On the other hand, if not IGP=ON and IG=OFF, i.e., if the IG signal has been inputted at least (IG=ON) (NO in step S2), mode setting unit 120 causes the process to proceed to step S5 and waits without selecting the control mode. Hereinafter, this waiting state will be referred to as "IG neutral state".

In step S6, mode setting unit 120 determines whether or not the IG neutral state continues for a predetermined time period T (e.g., approximately several seconds) or longer.

If the IG neutral state does not continue for predetermined time period T or longer (NO in step S6), mode setting unit 120 returns the process to step S1 and the process is repeated from step S1.

On the other hand, if the IG neutral state continues for predetermined time period T or longer (YES in step S6), mode setting unit 120 causes the process to proceed to step S7 and determines whether the CPLT signal has been inputted (CPLT=ON) or not.

If the CPLT signal is not inputted (CPLT=OFF) (NO in step S7), mode setting unit 120 returns the process to step S1 and the process is repeated from step S1.

On the other hand, if CPLT=ON (YES in step S7), mode setting unit 120 causes the process to proceed to step S4 and selects the charging control mode.

Control unit 130 will be described with reference to Fig. 5 again. Control unit 130 controls the devices of vehicle 1 in the control mode set by mode setting unit 120.

In the traveling control mode, control unit 130 brings SMR 11 into the closed state, so that the electric power of power storage device 10 can be supplied through PCU 20 to MG 30. Control unit 130 then controls the operation of PCU 20 based on the information from the sensors such as amount of operation AP of the accelerator pedal, and drives MG 30 by using the electric power of power storage device 10. As a result, vehicle 1 travels in accordance with the user's intention. In the traveling control mode, actuation of charging device 200 is prohibited. Therefore, external charging cannot be executed.

When the user presses IG switch 91 to stop the system during the traveling control mode, control unit 130 brings MR 71 into the open state. As a result, ECU 100 shifts from the actuation state to the sleep state.

On the other hand, in the charging control mode, control unit 130 brings SMR 11 into the closed state and connects charging device 200 to power storage device 10. ECU 100 then controls the operation of charging device 200 and converts the AC power of external power supply 500 into the DC power with which power storage device 10 can be charged. As a result, external charging is executed.

In the charging control mode, control unit 130 also controls charging device 200 and DC/DC converter 60 and permits a part of auxiliary device load 82 (auxiliary device load 83) to be actuated by using the electric power of external power supply 500. In other words, when the user actuates auxiliary device load 83 during the charging control mode, control unit 130 controls charging device 200 and converts the AC power of external power supply 500 into the DC power. Control unit 130 also controls DC/DC converter 60 and steps down a voltage of the converted electric power and supplies the electric power to auxiliary device load 82. As a result, during the charging control mode, the electric power of household external power supply 500 can be supplied to auxiliary device load 82 of vehicle 1 in real time, by actuating charging device 200 and DC/DC converter 60.

During external charging, control unit 130 monitors an amount of power stored in power storage device 10. When the amount of stored power reaches a target value (reaches the fully charged state), control unit 130 brings PIMR 72 into the open state in order to prevent unnecessary power consumption. As a result, ECU 100 shifts from the actuation state to the sleep state.

### [Control of Auxiliary Device during Charging Control Mode]

The case where the auxiliary device is an air-conditioning device such as an air conditioner will be described hereinafter.

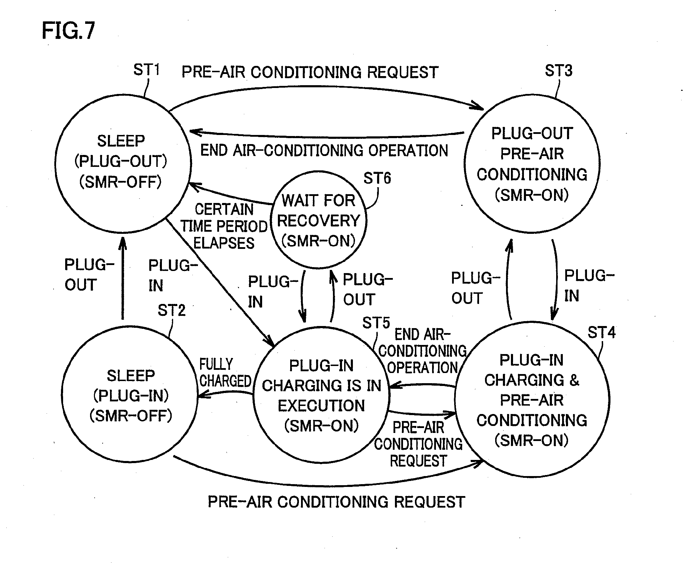

Fig. 7 is a state transition diagram related to operation of the air-conditioning device during the charging control mode.

Referring to Figs. 1 and 7, a state ST1 is an initial state and ECU 100 is in the sleep state. At this time, the vehicle is in a plug-out state by the user's operation of removing charging cable 400 from external power supply 500 or vehicle 1 (plug-out operation). SMR 11 is in the OFF state.

In a state ST2 as well, ECU 100 is in the sleep state. State ST2 is, however, different from state ST1 in that vehicle 1 is connected to external power supply 500 by charging cable 400.

A state ST3 is a state where pre-air conditioning is in execution in the plug-out state. At this time, in order to actuate air-conditioning unit 81, SMR 11 is controlled into the ON state.

A state ST4 is a state where plug-in charging is in execution and pre-air conditioning is in execution. At this time, in order to actuate air-conditioning unit 81 and execute charging, SMR 11 is controlled into the ON state.

A state ST5 is a state where plug-in charging is in execution and pre-air conditioning is not in execution. At this time, in order to execute charging, SMR 11 is controlled into the ON state.

A state ST6 is a state where recovery is awaited when an instantaneous power failure occurs at external power supply 500 or when the charging cable is temporarily removed during charging. At this time, in order to allow restart of charging, SMR 11 is controlled into the ON state.

Next, conditions for state transitions between states ST1 and ST6 will be described.

In the plug-out state, the state transition between state ST1 and state ST3 occurs. First, the state transition from state ST1 to state ST3 occurs when the user inputs a pre-air conditioning request through air-conditioning request switch 95 (the request including turning on by the timer). The state transition from state ST3 to state ST1 occurs when the user inputs a request for ending the air-conditioning operation through air-conditioning request switch 95 (the request including turning off by the timer).

Next, the case where charging is executed in the plug-out state will be described. The state transition from state ST1 to state ST5 occurs when vehicle 1 is connected to external power supply 500 by the plug-in operation. The state transition from state ST5 to state ST2 occurs when power storage device 10 reaches the fully charged state (SOC reaches a charging target value) by charging. The state transition from state ST2 to state ST1 occurs when vehicle 1 is disconnected from external power supply 500 by the plug-out operation.

These are the state transitions based on the normal operation. In contrast, the plug-out operation during charging or the plug-in operation during actuation of the air-conditioning device in the plug-out state is assumed. When such operation is performed, sudden stop of the actuating air-conditioning device does not fit the user's intention. Thus, in the present embodiment, state transitions described below are employed.

The state transition from state ST4 to state ST5 occurs when the user inputs the request for ending the air-conditioning operation through air-conditioning request switch 95 (the request including turning off by the timer). The state transition from state ST5 to state ST4 occurs when the user inputs the pre-air conditioning request through air-conditioning request switch 95 (the request including turning on by the timer).

The state transition from state ST5 to state ST6 occurs when vehicle 1 is disconnected from external power supply 500 by the plug-out operation (also including the case of a power failure). The state transition from state ST6 to state ST5 occurs when vehicle 1 is connected again to external power supply 500 by the plug-in operation (also including the case of recovery from the power failure) before a certain time period elapses.

The state transition from state ST6 to state ST1 occurs when the plug-in operation (also including the case of recovery from the power failure) is not performed even if the certain time period elapses after the occurrence of the state transition to state ST6.

The state transition from state ST2 to state ST4 occurs when the user inputs the pre-air conditioning request through air-conditioning request switch 95 (the request including turning on by the timer).

By managing states ST1 to ST6 described above, the state transition between state ST3 and state ST4 becomes possible. The state transition from state ST3 to state ST4 occurs when vehicle 1 is connected to external power supply 500 by the plug-in operation. The state transition from state ST4 to state ST3 occurs when vehicle 1 is disconnected from external power supply 500 by the plug-out operation.

In Fig. 7, combinations of the state of pre-air conditioning and the connection state by the charging cable are used as the conditions for the state transitions. By permitting the state transition between state ST3 and state ST4, sudden stop of the air conditioner is avoided even if the user removes the charging cable from the vehicle when the air conditioner is in operation during charging. Conversely, even if the user connects the charging cable to the vehicle when there is no connection to the external power supply during pre-air conditioning, sudden stop of the air conditioner is avoided.

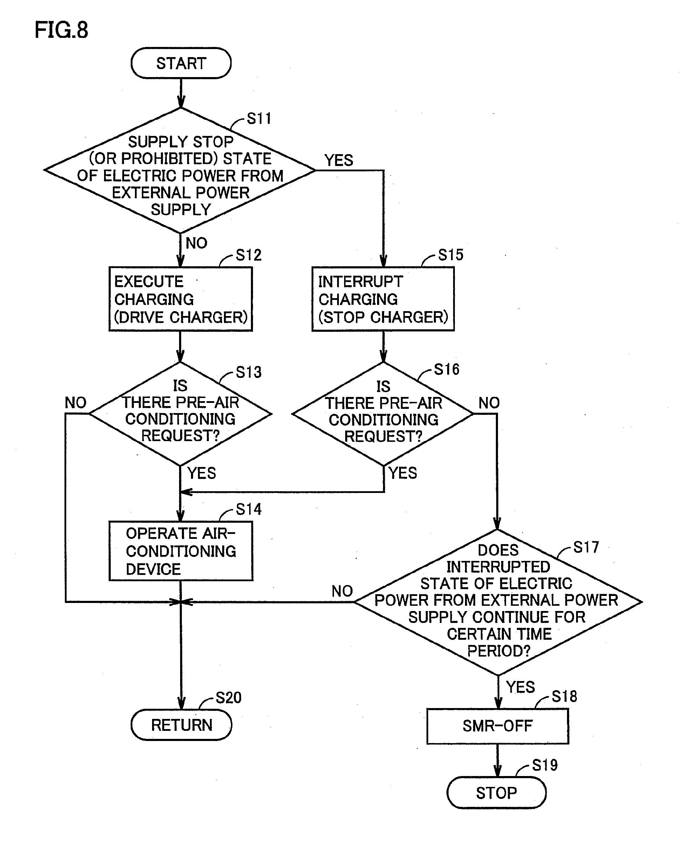

Fig. 8 is a flowchart for describing control of the auxiliary device during the charging control mode. The process in this flowchart is called from a main routine of a charging process and executed at regular time intervals or whenever a predetermined condition is satisfied, when the control mode is set to the charging control mode in step S4 of the flowchart in Fig. 6. The process in the flowchart shown in Fig. 8 corresponds to the process in Fig. 5 executed by control unit 130 based on outputs of power supply stop determining unit 121 and air-conditioning request detecting unit 122, when mode setting unit 120 sets the control mode to the charging control mode.

Referring to Fig. 8, when the process is started, it is first determined in step S11 whether or not the electric power from the external power supply is in a supply stop state or a supply prohibited state. For example, when the charging cable is removed from the vehicle in the charging control mode or when a power failure occurs at external power supply 500, it is determined that the electric power from the external power supply is in the supply stop state. More specifically, when input of the CPLT signal from pilot circuit 430 provided in charging cable 400 in Fig. 1 is discontinued or when cable connection signal PISW changes in response to removal of the connector or the operation for removing the connector, it is determined that the electric power from the external power supply is in the supply stop state.

If it is not determined in step S11 that the electric power from the external power supply is in the supply stop state, the process proceeds to step S12. In step S12, charging device 200 is driven and charging of power storage device 10 is executed. Then, in step S13, it is further determined whether there is a pre-air conditioning request or not. If there is a pre-air conditioning request in step S13, air-conditioning unit 81 is operated in step S14 (when air-conditioning unit 81 is in operation, the operation is maintained). The process then proceeds to step S20 and the control is returned to the main routine. On the other hand, if it is determined in step S13 that there is no pre-air conditioning request, the process immediately proceeds to step S20 and the control is returned to the main routine.

If it is determined in step S11 that the electric power from the external power supply is in the supply stop state, the process proceeds from step S11 to step S15. In step S15, control is executed to interrupt charging control, i.e., to stop charging device 200. Then, in step S16, it is determined whether there is a pre-air conditioning request or not. If there is a pre-air conditioning request in step S16, air-conditioning unit 81 is operated in step S14. The process then proceeds to step S20 and the control is returned to the main routine. On the other hand, if it is determined in step S16 that there is no pre-air conditioning request, the process proceeds to step S17.

In step S17, it is determined whether an interrupted state of the electric power from the external power supply has continued for a certain time period or not. If the certain time period does not elapse, i.e., if supply of the electric power from the external power supply is restarted before the certain time period elapses in step S17, the process proceeds to step S20 and the control is returned to the main routine. In this case, charging in the charging control mode is continued.

If the certain time period has elapsed, i.e., if supply of the electric power from the external power supply is not restarted after the certain time period elapses in step S17, the process proceeds to step S18 and SMR 11 is controlled into the OFF state. In step S19, the control stops.

In other words, if it is determined in step S13 or step S16 that there is a pre-air conditioning request in the charging control mode, a function of forced termination (shutoff of SMR 11) by interruption of the power supply in steps S17 and S18 is temporarily stopped.

Although it is determined in steps S13 and S16 in Fig. 8 whether there is a pre-air conditioning request or not, it may be simply determined whether or not there is an air conditioning request, not pre-air conditioning request, including the case where people are in the vehicle interior. As a result, such inconvenience can be eliminated that air conditioning is interrupted due to interruption of charging when the air-conditioning device is in operation by the user in the vehicle interior during charging.

Instead of determining whether there is a pre-air conditioning request or not in steps S13 and S16 in Fig. 8, it may be determined whether the auxiliary device (the lighting device, the audio device, the service power outlet) is in use or not. As a result, such inconvenience can be eliminated that operation of the auxiliary device is interrupted due to interruption of charging when the auxiliary device is in operation by the user in the vehicle interior during charging.

As described above, in the vehicle according to the present embodiment, when the power supply from outside stops, the control is switched based on whether the auxiliary device is in operation including pre-air conditioning or not.

As a result, even when the power supply stops, system shutoff for turning off SMR 11 is prohibited during execution of pre-air conditioning, and thus, air conditioning can be continued. In other words, pre-air conditioning in the plug-in state at a garage and the like and pre-air conditioning in the plug-out state away from home become both possible. In addition, the state transition between the plug-in state and the plug-out state during operation of the air-conditioning device becomes possible as well. Therefore, the usability is enhanced. Furthermore, if there is no request for actuating the auxiliary device such as the air-conditioning device when the power supply stops, system shutoff can be performed.

In the present embodiment, the case where the auxiliary device is the air-conditioning device such as the air conditioner has been described. However, the present embodiment is also applicable to the case where the auxiliary device is other devices. Other auxiliary devices include, for example, the DC/AC converter for supplying the AC power to the service power outlet, and the like. The present embodiment is preferable particularly when a load such as a personal computer is used in the vehicle, because interruption does not occur during supply of the electric power.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 vehicle; 10 power storage device; 11 SMR; 40 power transmission gear; 50 driving wheel; 60 converter; 70 low-voltage power supply; 80 auxiliary device; 81 air-conditioning unit; 82, 83, 84 auxiliary device load; 91 switch; 92 accelerator pedal position sensor; 93 brake pedal stroke sensor; 94 shift position sensor; 95 air-conditioning request switch; 110 signal generating unit; 120 mode setting unit; 121 power supply stop determining unit; 122 air-conditioning request detecting unit; 130 control unit; 200 charging device; 210 inlet; 400 charging cable; 410 connector; 420 plug; 430 pilot circuit; 500 external power supply; C1 capacitor; NL1 negative electrode line; 72 PIMR; PL1, PL3 positive electrode line; PL4 power line; R1, R2 relay; ST1 to ST6, ST1, ST2, ST3, ST4, ST5, ST6 state.

## Claims

1. A vehicle, comprising:
a power storage device (10) configured such that it can be charged from outside the vehicle;
a charging device (200) that receives electric power from outside the vehicle and charges said power storage device;
an auxiliary device (80) that receives the electric power from said power storage device or from outside the vehicle; and
a control device (100) that controls said charging device and said auxiliary device, wherein
when there is a request for operating said auxiliary device during execution of charging of said power storage device by said charging device, said control device continues operation of said auxiliary device even if input of the electric power from outside is discontinued, and
when there is no request for operating said auxiliary device during execution of charging of said power storage device by said charging device, said control device separates said power storage device from said charging device and said auxiliary device in response to discontinuation of input of the electric power from outside.

2. The vehicle according to claim 1, wherein
said auxiliary device includes an air-conditioning device (81).

3. The vehicle according to claim 2, further comprising
a system main relay (11) that opens and closes an electric power path extending from said power storage device to said charging device and said air-conditioning device, wherein
when there is no request for operating said air-conditioning device during execution of charging of said power storage device by said charging device, said control device controls said system main relay into an open state in response to discontinuation of input of the electric power from outside.

4. The vehicle according to claim 3, wherein
when input of the electric power from outside is discontinued, said control device maintains said system main relay in a closed state until a predetermined time period elapses, such that charging of said power storage device can be restarted when input of the electric power from outside is restarted.

5. The vehicle according to claim 3, wherein
said control device (100) includes:
a determining unit (121) that determines a supply state of the electric power from outside; and
a detecting unit (122) that detects the request for operating said air-conditioning device.

6. A method for controlling a vehicle including a power storage device (10) configured such that it can be charged from outside the vehicle, a charging device (200) that receives electric power from outside the vehicle and charges said power storage device, and an auxiliary device (80) that receives the electric power from said power storage device or from outside the vehicle, the method comprising the steps of:
determining whether charging of said power storage device by said charging device is in execution or not (S11);
determining whether there is a request for operating said auxiliary device or not (S13, S16);
when there is a request for operating said auxiliary device during execution of charging of said power storage device by said charging device, continuing operation of said auxiliary device even if input of the electric power from outside is discontinued (S14); and
when there is no request for operating said auxiliary device during execution of charging of said power storage device by said charging device, separating said power storage device from said charging device and said auxiliary device in response to discontinuation of input of the electric power from outside (S18).
